# EUROPEAN PATENT APPLICATION

(11) **EP 4 800 992 A1**
(43) Date of publication of application: **02.09.2026**
(21) Application number: 26160518.2
(22) Date of filing: 24.02.2026
(51) Int. Cl.: H04L 41/0663, H04W 24/04, H04W 84/12, H04W 84/18

(54) **DYNAMIC AND ADAPTIVE LOCAL AREA NETWORK (LAN) MANAGEMENT**

(30) Priority: 28.02.2025 US 202519067296
(71) Applicant: NCR Voyix Corporation, Atlanta, GA 30308-1007 (US)
(72) Inventor: TABB, Michael John, Atlanta, Georgia (US); PARUCHURI, Rakesh Babu, Hyderabad, Telangana (IN)
(74) Representative: Secerna LLP

(57) **Abstract**

Methods and system for maintaining communication between point-of-sale (POS) terminals and associated devices during network outages. A primary POS terminal automatically establishes itself as a wireless hotspot when detecting a network failure, creating an ad hoc network for continued operation. Associated staff and kitchen devices automatically connect to this temporary network using pre-configured credentials managed through an administrative interface. The system periodically monitors for restoration of the primary network and seamlessly transitions all devices back to the original network when available. This ensures continuous business operations during network outages without requiring manual intervention or technical expertise.

## Description

### Background

Traditional point-of-sale (POS) systems and associated transaction terminals, staff devices, and kitchen devices in retail establishments rely heavily on local area network (LAN) connectivity for their operations. When LAN network connectivity fails, these systems typically become inoperable, severely disrupting business operations and customer service. Current solutions either require manual intervention to establish alternative communication paths or result in complete system downtime until network connectivity is restored. Additionally, existing backup network solutions often require complex configuration steps and technical expertise to implement, making them impractical for many retail environments where immediate restoration of inter-device communication is crucial for business continuity.

### Summary

According to a first aspect of the present invention there is provided a method, comprising:
detecting a failure of a local area network (LAN) connection;
configuring, in response to detecting the failure, a primary POS terminal as a wireless hotspot;
establishing an ad hoc network using the wireless hotspot;
enabling communication between the primary POS terminal and one or more devices over the ad hoc network;
monitoring for restoration of the LAN connection;
detecting that the LAN connection has been restored; and
transitioning the primary POS terminal and the one or more devices back to the LAN connection responsive to detecting restoration of the LAN connection.

Aptly, wherein detecting the failure comprises periodically checking connectivity status of the LAN connection.

Aptly, wherein configuring the primary POS terminal comprises activating a wireless network interface of the primary POS terminal using pre-configured network settings.

Aptly, wherein establishing the ad hoc network comprises broadcasting a pre-configured service set identifier (SSID).

Aptly, wherein enabling communication comprises authenticating the one or more devices using pre-configured security credentials.

Aptly, wherein enabling communication comprises maintaining transaction processing capabilities between the primary POS terminal and the one or more devices.

Aptly, wherein monitoring comprises periodically testing the LAN connection at predetermined intervals.

Aptly, wherein transitioning comprises:
deactivating the wireless hotspot; and
causing the one or more devices to reconnect to the LAN connection.

Aptly, the method further comprises:
receiving configuration settings from an administrative interface; and
distributing the configuration settings to the POS terminal and the one or more devices.

Aptly, the method further comprises:
storing transaction data locally during operation of the ad hoc network; and
synchronizing locally stored transaction data with a remote server after transitioning back to the LAN connection.

Aptly, the method further comprises logging network status changes between the LAN connection and the ad hoc network.

According to a second aspect of the present invention there is provided a method, comprising:
receiving, at a point-of-sale (POS) device, network configuration settings from an administrative interface;
storing the network configuration settings to enable establishment of a failover local area network (LAN);
detecting that a primary LAN is unavailable or offline;
establishing the failover LAN using the stored network configuration settings;
facilitating communications between the POS device and one or more devices over the failover LAN; and
restoring communications over the primary LAN when the primary LAN is available or online.

Aptly, wherein receiving comprises identifying the network configuration settings as a network identifier and security credentials.

Aptly, wherein facilitating communications comprises maintaining a queue of transaction requests.

Aptly, wherein facilitating communications comprises routing orders between at least one front-of-house device and at least one kitchen device.

Aptly, the method further comprises logging network status changes between the primary LAN and the failover LAN.

Aptly, the method further comprises validating device credentials before allowing a connection to the failover LAN.

Aptly, the method further comprises maintaining a backup of transaction data during operation of the failover LAN.

According to a third aspect of the present invention there is provided a system, comprising:
a primary point-of-sale (POS) terminal comprising:
a network interface;
a processor; and
a memory storing instructions that, when executed by the processor, cause the primary POS terminal to:
   detect a failure of a local area network (LAN) connection;
   configure the network interface to operate as a wireless hotspot;
   establish an ad hoc network using the wireless hotspot;
   enable communication with one or more devices over the ad hoc network;
   monitor for restoration of the LAN connection; and
   transition the primary POS terminal and the one or more devices back to the LAN connection when restoration is detected.

Aptly, wherein the memory further stores network configuration settings received from an administrative interface, the network configuration settings comprising at least a service set identifier (SSID) and security credentials for establishing the ad hoc network.

### Brief Description of the Drawings

FIG. 1A is a diagram of a system for dynamic and adaptive local area network (LAN) management, according to an example embodiment.
FIG. 1B is a diagram illustrating LAN failover management by the system when a primary LAN has failed, according to an embodiment.
FIG. 2 is a flow diagram of a method for dynamic and adaptive LAN management in a store environment, according to an example embodiment.
FIG. 3 is a flow diagram of another method for dynamic and adaptive LAN management in a store environment, according to an example embodiment.

### Detailed Description

In retail environments (e.g., grocery stores, department stores, restaurants, hotels, etc.) local area network (LAN) failures can have devastating impacts on business operations that extend far beyond simple connectivity issues. When a LAN goes down, point-of-sale (POS) systems become isolated, preventing critical communications between front-of-house operations and kitchen or service areas. Orders cannot be transmitted, payment processing halts, and inventory management systems become inaccessible. This disruption creates confusion among staff, delays in service, and frustrated customers. Restaurants face particular challenges when kitchen display systems lose connectivity with ordering terminals, leading to missed or duplicated orders and disrupted service timing.

Traditional backup solutions often require technical expertise that may not be readily available in these service-oriented businesses. Manual workarounds, such as paper-based systems or standalone payment terminals, are inefficient and prone to errors. Additionally, these temporary solutions create reconciliation challenges once network connectivity is restored, as transaction data must be manually entered into the primary systems. The lack of automated failover capabilities means that even brief network interruptions can create lasting operational impacts.

The dynamic and adaptive local area network (LAN) management technology presented herein addresses particular technical problems in connection with retail and restaurant environments that rely on networked point-of-sale (POS) systems. Specifically, the technical problems include: (1) the complete disruption of critical business operations when LAN connectivity fails, preventing essential communications between front-of-house operations and kitchen/service areas; (2) the technical complexity and expertise required to implement traditional backup network solutions, making them impractical for service-oriented businesses; and (3) the lack of automated failover capabilities that can maintain secure device communications without manual intervention.

Embodiments of the technology disclosed herein provide technical solutions to the aforementioned technical problems. In particular, embodiments of the disclosed technology implement an automated network failover system where a primary POS terminal dynamically transforms into a wireless hotspot using pre-configured security settings, establishing an emergency LAN that maintains secure communication paths between all authorized devices. This represents a technological solution by: (1) enabling seamless continuity of operations through automated network failover capabilities without requiring technical intervention; (2) maintaining security through centralized administrative configuration that automatically deploys when the emergency network is activated; and (3) providing automated restoration and data synchronization when primary LAN connectivity returns.

In an embodiment presented herein, methods and a system provide seamless continuity of operations through automated network failover capabilities. When a network outage occurs, a primary POS terminal automatically transforms into a wireless hotspot, establishing an emergency LAN. This transition happens without requiring technical intervention from staff members, allowing business operations to continue with minimal disruption.

In an embodiment presented herein, the methods and system maintain security and configuration management through a centralized administrative interface. This interface enables information technology (IT) administrators to pre-configure network settings, security credentials, and device permissions that are automatically deployed when the emergency and failover network is activated. The pre-configured settings ensure that all authorized devices - from handheld ordering tablets to kitchen display systems - can automatically join the failover network while maintaining appropriate security protocols.

In an embodiment presented herein, the methods and system actively monitor network conditions and manage the transition back to the primary LAN when connectivity is restored. This automated restoration process eliminates the need for manual intervention and ensures that all connected devices return to the primary LAN in a coordinated manner. Transaction data collected during the outage is automatically synchronized with central systems, maintaining data integrity and eliminating the need for manual reconciliation procedures.

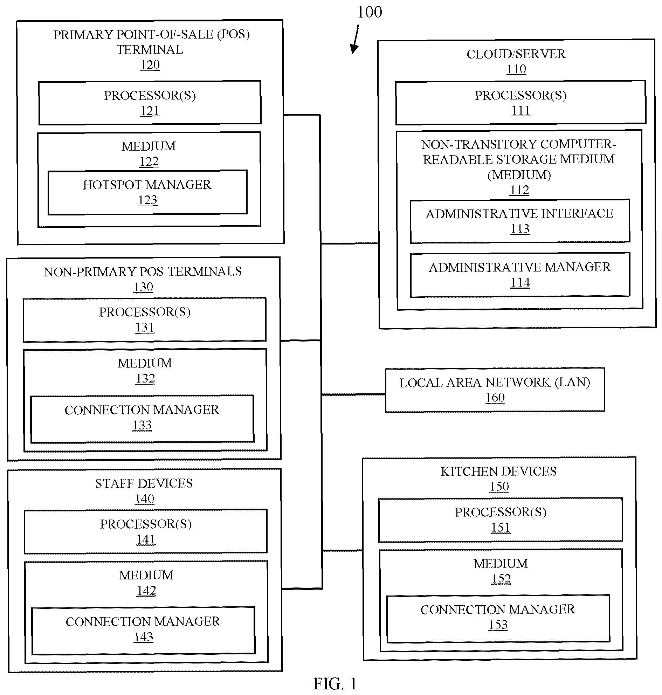

FIG. 1A is a diagram of a system 100 for dynamic and adaptive LAN management, according to an example embodiment. Notably, the components are shown schematically in greatly simplified form, with only those components relevant to understanding of the embodiments being illustrated.

Furthermore, the various components (that are identified in system 100) are illustrated and the arrangement of the components are presented for purposes of illustration only. It is to be noted that other arrangements with more or less components are possible without departing from the teachings of dynamic and adaptive LAN management, presented herein and below.

System 100 includes a cloud 110 or server, a primary POS terminal 120, one or more non-primary terminals 130, one or more staff devices 140, one or more kitchen devices 150, and a primary LAN 160. Cloud 110 includes at least one processor 111 and a non-transitory computer-readable storage medium 112 (medium), which includes instructions for an administrative interface 113 and an administrative manager 114. The instructions when executed by the processor 111 cause the processor 111 to perform operations discussed herein and below with respect to 113-114.

The primary POS terminal 120 includes at least one processor 121 and a medium 122, which includes instructions for a hotspot manager 123. The instructions when executed by the processor 121 cause the processor 121 to perform the operations discussed herein and below with respect to hotspot manager 123.

Each non-primary POS terminal 130 includes at least one processor 131 and medium 132, which includes instructions for a connection manager 133. The instructions when executed by processor 131 cause processor 131 to perform operations discussed herein and below with respect to connection manager 133.

Each staff device 140 includes at least one processor 141 and a medium 142, which includes instructions for a connection manager 143. The instructions when executed by the processor 141 cause the processor 141 to perform the operations discussed herein and below with respect to connection manager 143.

Each kitchen device 150 includes at least one processor 151 and a medium 152, which includes instructions for a connection manager 153. The instructions when executed by the processor 151 cause the processor 151 to perform operations discussed herein and below with respect to connection manager 153.

The LAN 160 provides network connectivity between the primary POS terminal 120, the non-primary POS terminals 130, the staff devices 140, and the kitchen devices 150 within a retail or store environment. This permits, as one example, a staff device 140 to open an order for a customer in a restaurant with a POS terminal 120 or 130, enter customer order details, and transmit the order details to a kitchen device 150. When the kitchen fulfills the order, the kitchen staff use the kitchen device to communicate that the order is ready for pickup to the staff device 140. The staff device 140 further interacts with POS terminal 120 or 130 to update the order, print a receipt for a customer order, and/or receive payment from the customer for the order. Without LAN connectivity, the restaurant requires a lot of extra manual work for the staff to physically interact with the kitchen staff and an operator of POS terminal 120 or 130, order details have to be maintained on paper, mistakes are more frequent, and customer wait times increase.

The administrative interface 113 provides a configuration portal that enables administrators to define network settings for failover operations. Through the administrative interface 113, administrators specify the service set identifier (SSID) and security credentials (e.g., WEP key) that will be used by the primary POS terminal 120 when establishing a wireless hotspot during LAN outages.

The administrative manager 114 distributes the configured network settings to the various devices in the store environment. Specifically, the administrative manager 114 pushes the SSID and security credentials to the connection managers (133, 143, 153) of the non-primary POS terminals 130, staff devices 140, and kitchen devices 150. This ensures all devices have the necessary configuration to automatically connect to the failover network when needed.

The hotspot manager 123 on the primary POS terminal 120 continuously monitors the status of the LAN 160 connection. When a LAN failure is detected, the hotspot manager 123 activates the wireless network interface using the pre-configured network settings received from the administrative interface 113. The hotspot manager 123 broadcasts the configured SSID and manages authentication of devices attempting to connect using the pre-configured security credentials.

The connection managers (133, 143, 153) on their respective devices monitor the status of their LAN 160 connection. When a connection loss is detected, each connection manager automatically initiates a search for the pre-configured SSID being broadcast by the primary POS terminal 120. Upon detecting the SSID, the connection managers authenticate their devices using the stored security credentials, enabling connection to the failover network.

During failover operation, the hotspot manager 123 continues to periodically test connectivity to the LAN 160. When LAN connectivity is restored, the hotspot manager 123 initiates the transition back to normal operations by deactivating its wireless hotspot. The connection managers (133, 143, 153) detect this change and automatically reconnect their devices to the restored LAN 160.

The LAN 160 serves as the primary network infrastructure connecting all store devices during normal operations. It enables secure communication between the primary POS terminal 120, non-primary POS terminals 130, staff devices 140, and kitchen devices 150, facilitating essential business operations such as order processing, payment handling, and kitchen coordination.

When LAN 160 is unavailable or offline, hotspot manager 123 broadcasts its pre-configured SSID as a failover wireless hotspot. The connection managers (133, 143, 153) detect that LAN 160 is offline and automatically authenticate to the failover wireless hotspot using their stored security credentials. Store business operations continue uninterrupted through the failover network, maintaining communication between POS terminals, staff devices, and kitchen devices. The hotspot manager 123 periodically tests LAN 160 connectivity and when it detects that LAN 160 is available and online, the wireless hotspot is deactivated. The connection managers (133, 143, 153) detect the loss of the wireless hotspot connection and automatically transition back to the restored LAN 160, ensuring dynamic, adaptive, and continuous network connectivity within the store environment.

During failover operations, the primary POS terminal 120 maintains local transaction data storage to prevent any loss of business data. When the system 100 transitions back to LAN 160, this locally stored transaction data is automatically synchronized with the cloud 110 associated with the store's POS system or a store server associated with the store's POS system, ensuring complete data continuity throughout the network disruption and recovery process.

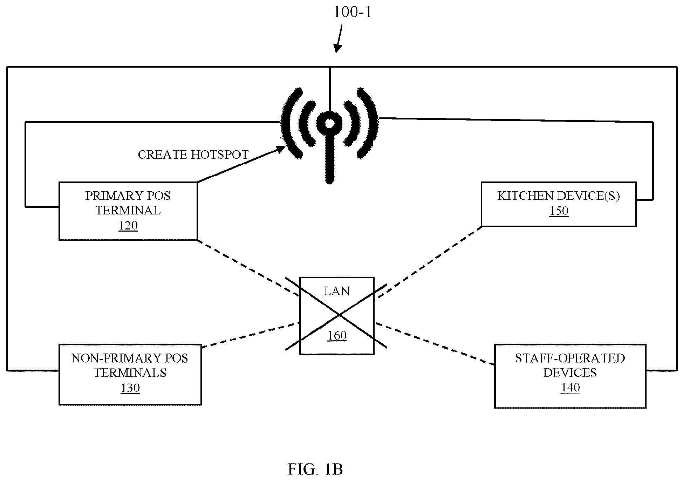

FIG. 1B is a diagram illustrating LAN failover management 100-1 by system 100 when the primary LAN 160 has failed, according to an example embodiment. The primary POS terminal 120 has activated its wireless hotspot capabilities and established an ad hoc network to maintain connectivity with the non-primary POS terminals 130, staff devices 140, and staff-operated devices 140.

As shown in FIG. 1B, when the primary POS terminal 120 detects a LAN 160 failure, the processor 121 executes the hotspot manager 123 instructions to create a wireless hotspot. The non-primary POS terminals 130, through their respective processors 131 executing connection manager 133 instructions, automatically connect to this hotspot using pre-configured credentials stored in their medium 132.

Similarly, the staff devices 140, through their processors 141 executing connection manager 143 instructions stored in medium 142, detect the LAN outage and automatically establish connections to the wireless hotspot created by the primary POS terminal 120. The connection managers 143 utilize the pre-configured SSID and security credentials previously distributed by the administrative manager 114 to authenticate and establish secure connections to the failover network, enabling seamless continuation of business operations without manual intervention or configuration by staff members.

The ad hoc network created in FIG. 1B enables continued communication between all connected devices despite the LAN 160 failure. This allows the primary POS terminal 120 to maintain transaction processing capabilities with the non-primary POS terminals 130, staff devices 140, and kitchen devices 150 ensuring uninterrupted business operations during the network outage.

Throughout the failover operation illustrated in FIG. 1B, the primary POS terminal 120 continues to monitor the status of LAN 160. When connectivity is restored, the system 100 coordinates an organized transition of all devices back to the primary LAN 160, maintaining operational continuity throughout the network switching process.

The kitchen devices 150, through their processors 151 executing connection manager 153 instructions stored in medium 152, similarly detect the LAN outage and automatically establish connections to the wireless hotspot. This ensures that order processing and kitchen communications remain operational during the network outage, maintaining the critical link between front-of-house operations and kitchen staff.

During the failover operation shown in FIG. 1B, the primary POS terminal 120 maintains local storage of all transaction data. This includes order details, payment information, and kitchen communications, ensuring no business data is lost during the network outage. When the LAN 160 is restored, this locally stored data is automatically synchronized with cloud 110 to maintain system-wide data consistency.

The dynamic and adaptive LAN management capabilities described above enable continuous business operations through automated network failover and recovery processes. The following figures illustrate specific methods for implementing these capabilities, detailing the operations performed by each component to detect failures, establish emergency networks, maintain operations, and restore normal connectivity.

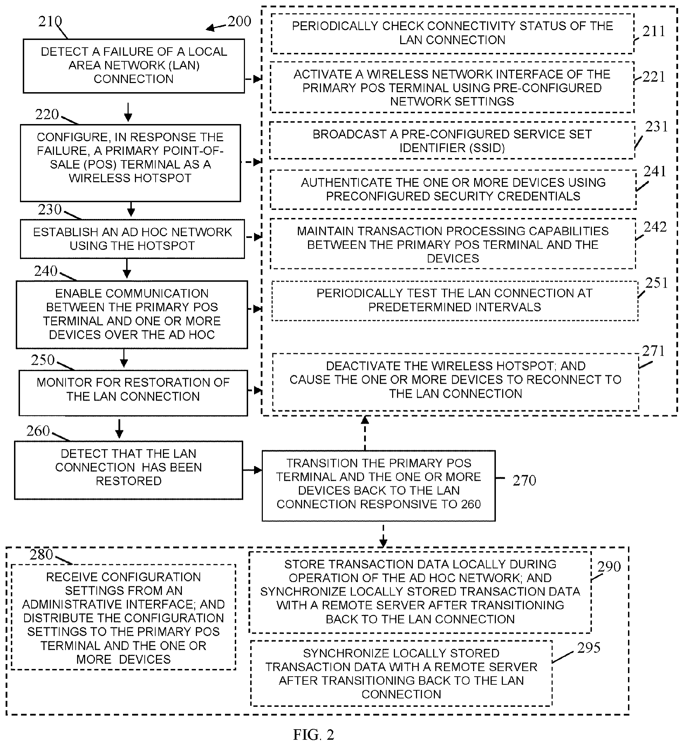

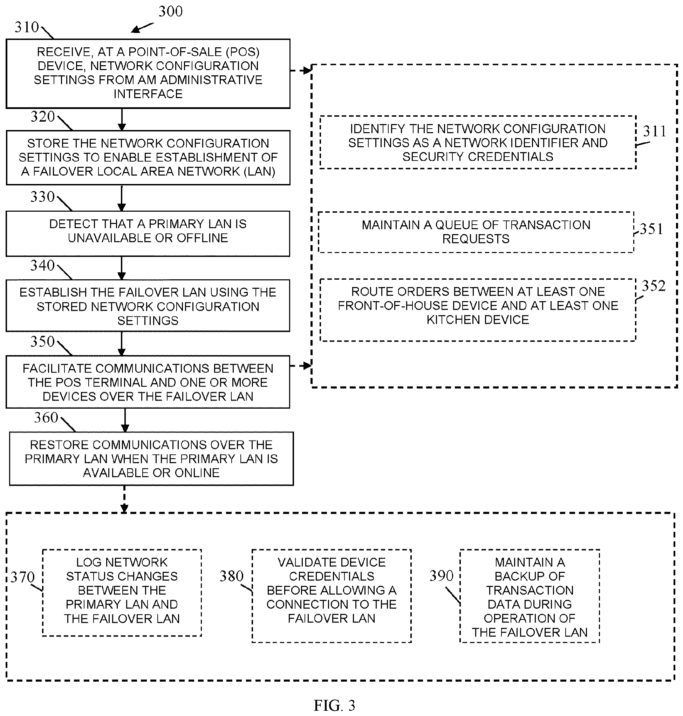

FIGS. 2 and 3 illustrate specific methods for implementing the dynamic and adaptive LAN management capabilities described above. These methods detail the specific steps executed by the various components of system 100 to detect network failures, establish failover networks, maintain business operations during outages, and restore normal operations when the primary network becomes available.

FIG. 2 is a flow diagram of a method 200 for dynamic and adaptive LAN management in a store environment, according to an example embodiment. The software module(s) that implements the method 200 is referred to as a "LAN failover manager." The LAN failover manager is implemented as executable instructions programmed and residing within memory and/or a non-transitory computer-readable (processor-readable) storage medium and executed by one or more processors of one or more devices. The processor(s) of the device that executes the LAN failover manager are specifically configured and programmed to process the LAN failover manager.

In an embodiment, the device that executes the LAN failover manager is primary POS terminal 120. In an embodiment, the device that executes the LAN failover manager is a combination of primary POS terminal 120, one or more non-primary POS terminals 130, one or more staff devices 140, and/or one or more kitchen devices 150. In an embodiment, the LAN failover manager is all or some combination of hotspot manager 123, connection manager 133, connection manager 143, and/or connection manager 153.

At 210, the LAN failover manager, detects a failure of a LAN connection or a lack of network connectivity for the LAN. In an embodiment, at 211, the LAN failover manager periodically checks connectivity status of the LAN connection.

At 220, the LAN failover manager configures, in response to the failure detected at 210, a primary POS terminal 120 as a wireless hotspot. In an embodiment, at 221, the LAN failover manager activates a wireless network interface of the primary POS terminal 120 using preconfigured network settings including the SSID and security credentials previously received from the administrative interface 113. The network settings are stored locally on the primary POS terminal 120 to enable immediate failover capability without requiring real-time communication with the administrative interface.

At 230, the LAN failover manager establishes an ad hoc network using the hotspot. In an embodiment, at 231, the LAN failover manager broadcasts a preconfigured service set identifier (SSID).

At 240, the LAN failover manager enables communication between the primary POS terminal 120 and one or more devices (130, 140, 150) over the ad hoc network. In an embodiment, at 241, the LAN failover manager authenticates the one or more devices using preconfigured security credentials. In an embodiment, at 242, the LAN failover manager maintains transaction processing capabilities between the primary POS terminal 120 and the one or more devices.

At 250, the LAN failover manager monitors for restoration of the LAN connection. In an embodiment, at 251, the LAN failover manager periodically tests the LAN connection at predetermined intervals.

At 260, the LAN failover manager detects that the LAN connection has been restored. At 270, the LAN failover manager transitions the primary POS terminal 120 and the one or more devices back to the LAN connection responsive to the restoration of the LAN connection at 260. In an embodiment, at 271, the LAN failover manager deactivates the wireless hotspot and causes the one or more devices to reconnect to the LAN connection.

In an embodiment, at 280, the LAN failover manager receives configuration settings from an administrative interface 113. The LAN failover manager distributes or synchronizes the configuration settings to the primary POS terminal 120 and the one or more devices (130, 140, 150).

In an embodiment, at 290, the LAN failover manager stores transaction data locally during operation of the ad hoc network and synchronize locally stored transaction data with a remote server or cloud 110 after transitioning back to the LAN connection. In an embodiment, at 295, the LAN failover manager logs network status changes between the LAN connection and the ad hoc network.

FIG. 3 is a flow diagram of another method 300 for dynamic and adaptive LAN management in a store environment, according to an example embodiment. The software module(s) that implements the method 300 is referred to as a "LAN connection manager." The LAN connection manager is implemented as executable instructions programmed and residing within memory and/or a non-transitory computer-readable (processor-readable) storage medium and executed by one or more processors of a device. The processors that execute the LAN connection manager are specifically configured and programmed for processing LAN connection manager.

In an embodiment, the device that executes the LAN connection manager is primary POS terminal 120. In an embodiment, the device that executes the LAN connection manager is a combination of cloud 110, primary POS terminal 120, one or more non-primary POS terminals 130, one or more staff devices 140, and/or one or more kitchen devices 150. In an embodiment, the LAN connection manager is all or some combination of administrative interface 113, administrative manager 114, hotspot manager 123, connection manager 133, connection manager 143, connection manager 153, and/or method 200. The LAN connection manager presents another, and in some ways an enhanced processing perspective from that which was described above with method 200 of FIG. 2.

At 310, the LAN connection manager receives network configuration settings from an administrative interface 113. In an embodiment, at 311, the LAN connection manager identifies the network configuration settings as a network identifier and security credentials.

At 320, the LAN connection manager stores the network configuration settings to enable establishment of a failover LAN. At 330, the LAN connection manager detects that a primary LAN is unavailable or offline. At 340, the LAN connection manager establishes the failover LAN using the stored network configuration settings.

At 350, the LAN connection manager facilitates communications between the primary POS terminal 120 and one or more devices (130, 140, 150) over the failover LAN. In an embodiment, at 351, the LAN connection manager maintains a queue of transaction requests in local storage to ensure no transactions are lost during the network outage. In an embodiment, at 352, the LAN connection manager routes orders between at least one front-of-house device (e.g., non-primary POS terminal 130 or staff device 140) and at least one kitchen device 150, maintaining critical business operations during the network disruption.

At 360, the LAN connection manager restores communications over the primary LAN when the primary LAN is available and online. In an embodiment, at 370, the LAN connection manager logs network status changes between the primary LAN and the failover LAN.

In an embodiment, at 380, the LAN connection manager validates device credentials before allowing a connection to the failover LAN. In an embodiment, at 390, the LAN connection manager maintains a backup of transaction data during operation of the failover LAN.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
detecting a failure of a local area network (LAN) connection;
configuring, in response to detecting the failure, a primary POS terminal as a wireless hotspot;
establishing an ad hoc network using the wireless hotspot;
enabling communication between the primary POS terminal and one or more devices over the ad hoc network;
monitoring for restoration of the LAN connection;
detecting that the LAN connection has been restored; and
transitioning the primary POS terminal and the one or more devices back to the LAN connection responsive to detecting restoration of the LAN connection.

2. The method of claim 1, wherein detecting the failure comprises periodically checking connectivity status of the LAN connection.

3. The method of claim 1 or claim 2, wherein configuring the primary POS terminal comprises activating a wireless network interface of the primary POS terminal using pre-configured network settings.

4. The method of any preceding claim, wherein establishing the ad hoc network comprises broadcasting a pre-configured service set identifier (SSID); and/or
enabling communication comprises authenticating the one or more devices using pre-configured security credentials.

5. The method of any preceding claim, wherein enabling communication comprises maintaining transaction processing capabilities between the primary POS terminal and the one or more devices; and/or
monitoring comprises periodically testing the LAN connection at predetermined intervals.

6. The method of any preceding claim, wherein transitioning comprises:
deactivating the wireless hotspot; and
causing the one or more devices to reconnect to the LAN connection.

7. The method of any preceding claim, further comprising:
receiving configuration settings from an administrative interface; and
distributing the configuration settings to the POS terminal and the one or more devices.

8. The method of any preceding claim, further comprising:
storing transaction data locally during operation of the ad hoc network; and
synchronizing locally stored transaction data with a remote server after transitioning back to the LAN connection.

9. The method of any preceding claim, further comprising logging network status changes between the LAN connection and the ad hoc network.

10. A method, comprising:
receiving, at a point-of-sale (POS) device, network configuration settings from an administrative interface;
storing the network configuration settings to enable establishment of a failover local area network (LAN);
detecting that a primary LAN is unavailable or offline;
establishing the failover LAN using the stored network configuration settings;
facilitating communications between the POS device and one or more devices over the failover LAN; and
restoring communications over the primary LAN when the primary LAN is available or online.

11. The method of claim 10, wherein receiving comprises identifying the network configuration settings as a network identifier and security credentials.

12. The method of claim 10 or 11, wherein facilitating communications comprises maintaining a queue of transaction requests; and/or
facilitating communications comprises routing orders between at least one front-of-house device and at least one kitchen device.

13. The method of any one of claims 10 to 12, further comprising logging network status changes between the primary LAN and the failover LAN; and/or
validating device credentials before allowing a connection to the failover LAN; and/or
maintaining a backup of transaction data during operation of the failover LAN.

14. A system, comprising:
a primary point-of-sale (POS) terminal comprising:
a network interface;
a processor; and
a memory storing instructions that, when executed by the processor, cause the primary POS terminal to:
detect a failure of a local area network (LAN) connection;
configure the network interface to operate as a wireless hotspot;
establish an ad hoc network using the wireless hotspot;
enable communication with one or more devices over the ad hoc network;
monitor for restoration of the LAN connection; and
transition the primary POS terminal and the one or more devices back to the LAN connection when restoration is detected.

15. The system of claim 14, wherein the memory further stores network configuration settings received from an administrative interface, the network configuration settings comprising at least a service set identifier (SSID) and security credentials for establishing the ad hoc network.
